# EUROPÄISCHE PATENTSCHRIFT

(11) **EP 1 818 580 B1**
(45) Veröffentlichungstag und Bekanntmachung des Hinweises auf die Patenterteilung: **19.10.2011**
(21) Anmeldenummer: 06002709.1
(22) Anmeldetag: 10.02.2006
(51) Int. Cl.: F16J 15/32

(54) **Abstreifer**
Scraper
Racleur

(43) Veröffentlichungstag der Anmeldung: 15.08.2007
(73) Patentinhaber: Carl Freudenberg KG, 69469 Weinheim (DE)
(72) Erfinder: Von Borstel, Dieter, 21720 Guderhandviertel (DE)

(56) Entgegenhaltungen:
- DE-A- 3 937 896
- US-A- 5 649 709
- US-A- 5 897 119

## Beschreibung

### Technisches Gebiet

Die Erfindung betrifft einen Abstreifer, umfassend zumindest eine Abstreiflippe, die eine Lippenkontur aufweist, wobei die Lippenkontur, im Längsschnitt betrachtet, von der Umgebungsseite des Abstreifers axial in Richtung der Seite des abzudichtenden Raums bogenförmig gestaltet ist und eine Tangentensteigung aufweist, die stetig ansteigt.

Ein solcher Abstreifer ist aus der DE 39 37 896 A1 bekannt. Der Abstreifer ist einstückig und materialeinheitlich mit einem Dichtring ausgebildet und axial auf der dem abzudichtenden Raum axial abgewandten Seite der Dichtlippe angeordnet. Die dynamisch beanspruchte Dichtlippe und die Abstreiflippe liegen mit radialer Vorspannung an einer abzudichtenden Stange an.

Abstreifer gelangen radial zwischen zwei relativ zueinander axial hin- und her beweglichen Maschinenelementen zur Anwendung. Das erste Maschinenelement kann beispielsweise durch eine Stange gebildet sein, das zweite Maschinenelement durch ein Gehäuse, wobei der Abstreifer relativ ortsfest im Gehäuse angeordnet ist und die abzustreifende Oberfläche der Stange anliegend umschließt.

Abstreifer bilden häufig einen Bestandteil einer Dichtungsanordnung und gelangen dann in Kombination mit einem Dichtring zur Anwendung. Der Dichtring ist dabei auf der dem abzudichtenden Raum axial zugewandten Seite des Abstreifers angeordnet und hält abzudichtendes Medium innerhalb des abzudichtenden Raums bei in die Umgebung ausfahrender Stange zurück. Fährt die Stange anschließend aus der Umgebung wieder in Richtung des abzudichtenden Raums ein, verhindert der Abstreifer durch seine Abstreifwirkung, dass Verunreinigungen auf der abzustreifenden Oberfläche zusammen mit der Stange in die Dichtungsanordnung / in den abzudichtenden Raum gelangen und dort beispielsweise die Dichtlippe beschädigen oder zerstören.
Außerdem muss der Abstreifer derart gestaltet sein, dass eine Leckage von abzudichtendem Medium, das den Dichtring bei ausfahrender Stange in Richtung des Abstreifers passiert hat, minimiert wird. Das vom Abstreifer nicht in der Dichtungsanordnung zurückgehaltene abzudichtende Medium muss vom Abstreifer bei Rückbewegung der Stange wieder in Richtung des abzudichtenden Raums gelassen werden. Dadurch wird der Abstreifer geschmiert.
Die zuvor genannten Funktionen erfüllt der Abstreifer nur dann, wenn der durch die Anpressung der Abstreiflippe auf die abzustreifende Oberfläche verursachte Pressungsverlauf sehr genau erreicht wird. Voraussetzung für einen genauen Pressungsverlauf sind jedoch teure, in fertigungstechnischer Hinsicht nur schwer zu erreichende, sehr geringe Einbautoleranzen und eine sehr genaue konzentrische Zuordnung der beiden gegeneinander abzudichtenden Maschinenelemente.

Der Erfindung liegt die Aufgabe zu Grunde, einen Abstreifer der eingangs genannten Art derart weiter zu entwickeln, dass die zuvor beschriebenen Funktionen bezüglich Abstreifen von Verunreinigungen und Passieren lassen von abzudichtendem Medium aus der Umgebung in Richtung des abzudichtenden Raums an der Abstreiflippe vorbei auch dann sehr gut erfüllt werden und dass der Pressungsverlauf auch dann sehr gut ist, wenn Fertigungs- und/oder Einbautoleranzen größer sind und/oder die Konzentrizität der gegeneinander abzudichtenden Maschinenelemente geringer ist. Insgesamt soll der Abstreifer auch bei diesen Bedingungen gleich bleibend gute Gebrauchseigenschaften während einer langen Gebrauchsdauer aufweisen.

Diese Aufgabe wird erfindungsgemäß durch die Merkmal von Anspruch 1 gelöst. Auf vorteilhafte Ausgestaltungen nehmen die Unteransprüche Bezug. Zur Lösung der Aufgabe ist es vorgesehen, dass die Lippenkontur die Geometrie einer Viertel Ellipse aufweist. Durch diese spezielle Lippengeometrie wird erreicht, dass der Pressungsverlauf der Abstreiflippe stets einem idealen Sollwert entspricht, wobei der vorteilhafte genaue Pressungsverlauf auch bei Verlagerungen der gegeneinander abzudichtenden Maschinenelemente erhalten bleibt. Diese Verlagerungen können beispielsweise durch einen Winkel- und/oder Radialversatz entstehen und/oder durch herstellungsbedingte und/oder montagebedingte Toleranzen der miteinander montierten Teile der Abstreiferanordnung.

Die vorteilhaften Gebrauchseigenschaften des beanspruchten Abstreifers sind darauf zurückzuführen, dass durch die bogenförmig gestaltete Lippenkontur unerwünschte Veränderungen in der Zuordnung von Abstreiflippe zu abzustreifender Oberfläche kompensiert werden könne. Wenn sich beispielsweise der Abstand und der Winkel der abzustreifenden Oberfläche des relativ zur Abstreiflippe beweglichen ersten Maschinenelements relativ zum Drehpunkt der Dichtlippe verändert, kommt, im Längsschnitt betrachtet, ein anderer Punkt der Lippenkontur zum Eingriff und kompensiert die Veränderung.

Es ist von Vorteil, wenn die Hauptachse der elliptischen Lippenkontur und die abzustreifende Oberfläche eines relativ zum Abstreifer axial hin- und her beweglichen Maschinenelements einen Winkel zwischen -45° und +45°, weiter bevorzugt zwischen 0° und +15° einschließen. Die Kompensation von Winkel- und/oder Radialversatz und/oder betriebsbedingten und/oder herstellungsbedingten Toleranzen ist dadurch besonders gut. Daraus resultieren gleichbleibend gute Gebrauchseigenschaften während einer langen Gebrauchsdauer.

Die bogenförmige Lippenkontur kann umgebungsseitig axial in einen ebenen, sich parallel zur abzustreifenden Oberfläche erstreckenden Abstreifbereich auslaufen, wobei das Verhältnis aus axialer Länge des Abstreifers zu axialer Länge des Abstreifbereichs bevorzugt < 0,2 ist. Durch die zuvor beschriebene Geometrie wird einerseits eine gute Abstreifwirkung von Verunreinigungen von der abzustreifenden Oberfläche und andererseits eine gute Rückförderwirkung des abzudichtenden Mediums an der Abstreiflippe vorbei in Richtung des abzudichtenden Raums gewährleistet. Dieser gute Kompromiss trägt maßgeblich zu den gleich bleibend guten Gebrauchseigenschaften während einer langen Gebrauchsdauer bei, und zwar auch unter Winkel- und/oder Radialversatz und/oder Toleranzeinflüssen.

Der Abstreifer ist bevorzugt kreisringförmig ausgebildet, mit einer radial inneren Lippenkontur.

Außerdem betrifft die Erfindung eine Abstreiferanordnung.

Aus der DE 31 00 627 A1 sind Abstreiferanordnung bekannt.

Der Abstreifer der vorbekannten Abstreiferanordnung ist in seinem Einbauraum schwimmend angeordnet, umschließt die abzudichtende Oberfläche der Stange keilförmig anliegend.

Der Erfindung liegt außerdem die Aufgabe zu Grunde, eine Abstreiferanordnung derart weiter zu entwickeln, dass die zuvor beschriebenen Funktionen bezüglich Abstreifen von Verunreinigungen und Passieren lassen von abzudichtendem Medium aus der Umgebung in Richtung des abzudichtenden Raums an der Abstreiflippe vorbei auch dann sehr gut erfüllt werden und dass der Pressungsverlauf auch dann sehr gut ist, wenn Fertigungs- und/oder Einbautoleranzen größer sind und/oder die Konzentrizität der gegeneinander abzudichtenden Maschinenelemente geringer ist. Insgesamt soll der Abstreifer auch bei diesen Bedingungen gleich bleibend gute Gebrauchseigenschaften während einer langen Gebrauchsdauer aufweisen. Diese Aufgabe wird durch eine Abstreiferanordnung gelöst, umfassend einen Abstreifer, wie zuvor beschrieben, der die abzustreifende Oberfläche des ersten Maschinenelements mit seiner Abstreiflippe anliegend berührt, wobei der Abstreifer in einem radial in Richtung des ersten Maschinenelements offenen Einbauraum eines zweiten Maschinenelements schwimmend angeordnet ist. Durch die erfindungsgemäße Ausgestaltung der Abstreiferanordnung werden gute Gebrauchseigenschaften hinsichtlich des Pressungsverlaufs des Abstreifers auch unter Winkel- und/oder Radialversatz und/oder unerwünschten Toleranzeinflüssen erreicht.

Der Abstreifer im Einbauraum in axialer und/oder radialer Richtung schwimmend angeordnet, bevorzugt in axialer und radialer Richtung.

### Kurzbeschreibung der Zeichnung

Der erfindungsgemäße Abstreifer und die erfindungsgemäße Abstreiferanordnung werden nachfolgend anhand der Figuren 1 bis 4 näher beschrieben.

Die Figuren 1 bis 4 zeigen jeweils in schematischer Darstellung:
- Fig. 1: eine Abstreiflippe eines Abstreifers als vergrößerter Ausschnitt,
- Fig. 2: ein erstes Ausführungsbeispiel einer Abstreiferanordnung mit einer Abstreiflippe gemäß Fig. 1,
- Fig. 3: ein zweites Ausführungsbeispiel einer Abstreiferanordnung mit einer Abstreiflippe gemäß Fig. 1,
- Fig. 4: ein drittes Ausführungsbeispiel einer Abstreiferanordnung mit einer Abstreiflippe gemäß Fig. 1.

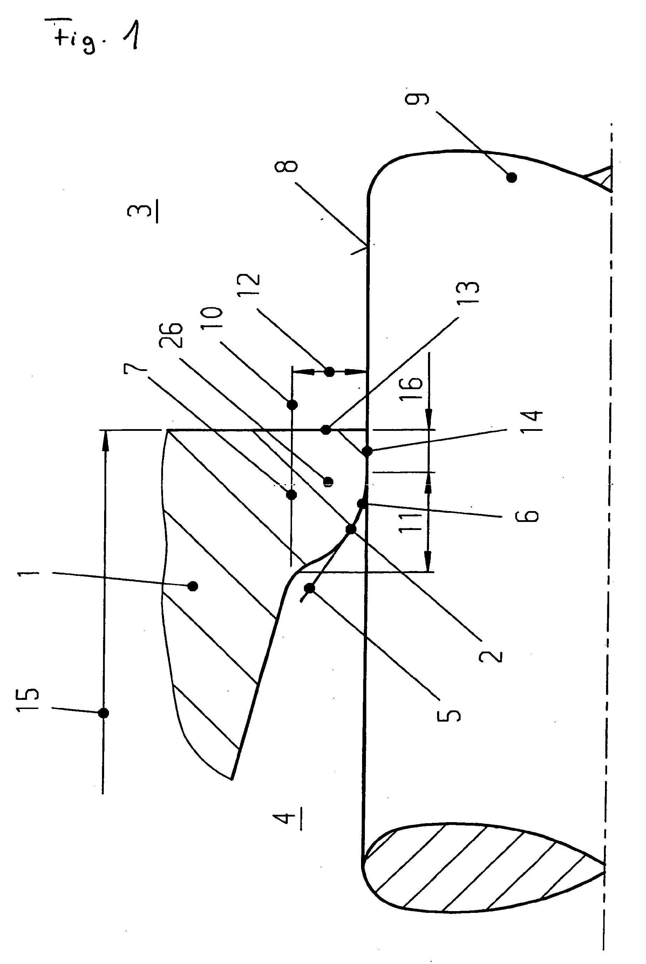

In den Figuren 1 bis 4 ist jeweils ein ringförmiger Abstreifer gezeigt, der eine Abstreiflippe 1 umfasst, die eine radial innere Lippenkontur 2 aufweist, wobei die Lippenkontur 2, im hier gezeigten Schnitt, von der Umgebungsseite 3 des Abstreifers axial in Richtung der Seite des abzudichtenden Raums 4 bogenförmig gestaltet ist. Die Lippenkontur 2 weist eine Tangentensteigung 5 auf, die axial von der Umgebungsseite 3 zum abzudichtenden Raum 4 stetig ansteigt.

In Fig. 1 ist ein Ausschnitt aus einer erfindungsgemäßen Abstreiflippe 1 in vergrößerter Darstellung gezeigt.

Der Abstreifer und die Abstreiflippe 1 bestehen aus einem für Abstreifer an sich bekannten, geeigneten Werkstoff, der nicht Gegenstand der vorliegenden Erfindung ist. Die Abstreiflippe 1 kann beispielsweise aus einem geeigneten elastomeren Werkstoff bestehen.

Im hier dargestellten Ausführungsbeispiel ist der Abstreifer kreisringförmig ausgebildet, mit einer inneren Lippenkontur 2, die die Geometrie einer Viertel Ellipse 6 aufweist. Die Hauptachse 7 der elliptischen Lippenkontur 2, die sich parallel zur abzustreifenden Oberfläche 8 eines relativ zum Abstreifer axial hin- und her beweglichen ersten Maschinenelements 9 erstreckt, schließt mit der Symmetrieachse des kreisringförmigen Abstreifers, einen Winkel 10 ein, der 0° beträgt.
Im hier dargestellten Ausführungsbeispiel ist der Verhältnis aus der Länge 11 der Hauptachse 7 zur Länge 12 der Nebenachse 13 0,75. Der Abstreifbereich 14 der Lippenkontur 2 erstreckt sich eben und parallel zur abzustreifenden Oberfläche 8, wobei das Verhältnis aus der axialen Länge 15 des Abstreifers zur axialen Länge 16 des Abstreifbereichs 15 ≤ 0,2 ist.

Die innere Lippenkontur 2 der Abstreiflippe 1 bedingt, besonders dann, wenn der Abstreifer in seinem Einbauraum schwimmend angeordnet ist, gleichbleibend gute Gebrauchseigenschaften während einer langen Gebrauchsdauer und zwar auch dann, wenn die abzustreifende Oberfläche 8 exzentrisch und/oder unter einem Winkel 10 zum Abstreifer angeordnet ist. Auch herstellungsbedingte und/oder montagebedingte Toleranzen können durch die vorteilhafte Geometrie der Lippenkontur und die schwimmende Anordnung ausgeglichen werden, und der Pressungsverlauf zwischen der Abstreiflippe 1 und der abzustreifenden Oberfläche 8 ist auch unter diesen genannten ungünstigen Bedingungen umfangsseitig weitgehend gleich und sehr genau. Durch diese vorteilhafte Geometrie und die schwimmende Anordnung wird das Eindringen von Fremdkörpern in die Dichtungsordnung bei einfahrendem ersten Maschinenelement 9 verhindert, wobei gleichzeitig abzudichtendes Medium, das zuvor am Abstreifer vorbei in Richtung Umgebung 3 gelangt ist, wieder mit eingeschleppt wird. Das Ausschleppen von abzudichtendem Medium, das an der Abstreiflippe 1 vorbei in Richtung Umgebung 3 gelangt und das anschließende Einschleppen des abzudichtenden Mediums ist vorteilhaft, um die Abstreiflippe 1 ausreichend zu schmieren.

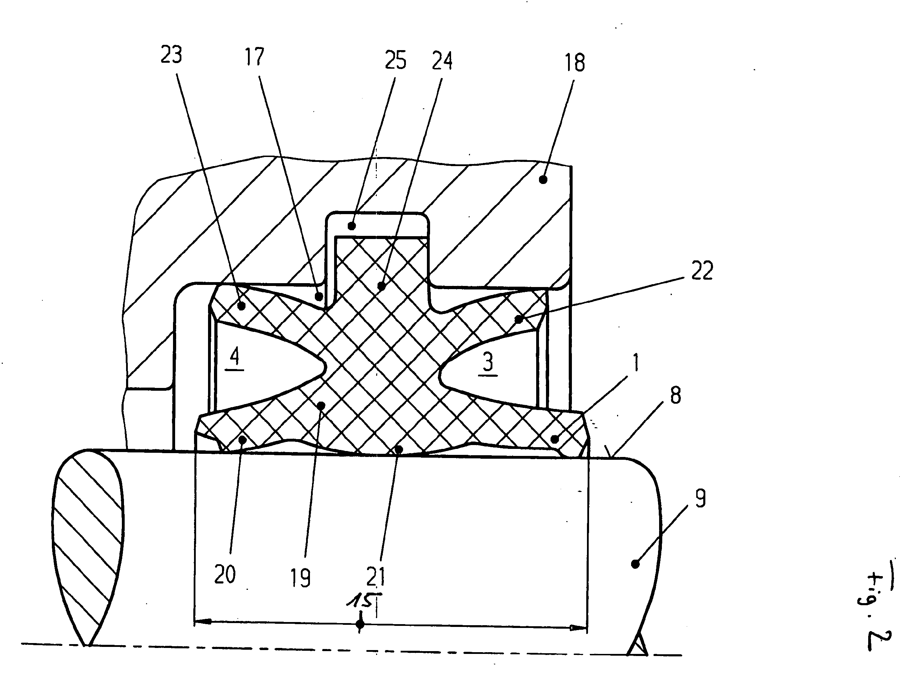

In den Figuren 2 bis 4 ist jeweils ein Ausführungsbeispiel einer Abstreiferanordnung gezeigt, die einen Abstreifer umfasst, wie zuvor beschrieben.

Um die Gebrauchseigenschaften weiter zu verbessern, ist der Abstreifer in einem radial in Richtung des ersten Maschinenelements 9 offen Einbauraum 17 eines zweiten Maschinenelements 18 schwimmend angeordnet. Der Abstreifer ist im Einbauraum in axialer und radialer Richtung schwimmend angeordnet. Das erste Maschinenelement 9 ist in diesem Ausführungsbeispiel als Stange, das zweite Maschinenelement 18 als Gehäuse ausgebildet, wobei generell auch die Möglichkeit besteht, dass das erste Maschinenelement 9 als Gehäuse und das zweite Maschinenelement als Stange ausgebildet ist. Im ersten Fall ist die Dichtung als Stangendichtung ausgebildet, im zweiten Fall als Kolbendichtung.

In den Figuren 2 bis 4 ist der Abstreifer einstückig und materialeinheitlich mit einem Dichtring 19 ausgebildet, wobei der Dichtring 19 und der Abstreifer in einer funktionstechnischen Reihenschaltung angeordnet sind. Der Dichtring 19 ist dem Abstreifer axial in Richtung des abzudichtendes Raums 4 mit Abstand benachbart zugeordnet, wobei in den hier gezeigten Ausführungsbeispielen axial zwischen der Dichtlippe 20 des Dichtrings 19 und der Abstreiflippe 1 des Abstreifers ein Gleitwulst 21 angeordnet ist, die die abzustreifende Oberfläche 8 ebenfalls anliegend umschließt. Auch der Gleitwulst 21 ist einstückig und materialeinheitlich mit Abstreifer und Dichtring 19 ausgebildet.

In den Ausführungsbeispielen Figuren 2 bis 4 ist der kombinierte Abstreifer-/Dichtring im Wesentlichen X-förmig ausgebildet und weist zusätzlich zur Abstreiflippe 1 und der der Abstreiflippe 1 axial benachbart zugeordneten Dichtlippe 20 zwei weitere Dichtlippen 22, 23 auf, die sich radial gegenüber liegend der abzustreifenden Oberfläche 8 am zweiten Maschinenelement 18 abstützen. Die Abstreiflippe 1, die Dichtlippe 20 und die beiden weiteren Dichtlippen 22, 23 befinden sich während ihrer bestimmungsgemäßen Verwendung im eingebauten Zustand im Momentengleichgewicht, das eine stabile Lage auch bei radialen oder kardanischen Bewegungen des beweglichen Maschinenelements 9 gewährleistet. Dieses Momentengleichgewicht ermöglicht bei radialen Verlagerungen des abzustreifenden Maschinenelements 9 eine elastische Nachgiebigkeit, ohne dass sich die vorteilhafte Lage der Abstreiflippe 1 relativ zur abzustreifenden Oberfläche 8 ändert.

In Fig. 2 weist der erfindungsgemäße Abstreifer eine sich radial in Richtung des zweiten Maschinenelements 18 erstreckende Führungsnase 24 auf, die in axialer und radialer Richtung jeweils mit Abstand von einer Führungsnut 25 des zweiten Maschinenelements 18 umschlossen ist, um so eine schwimmende Abstützung zu gewährleisten.

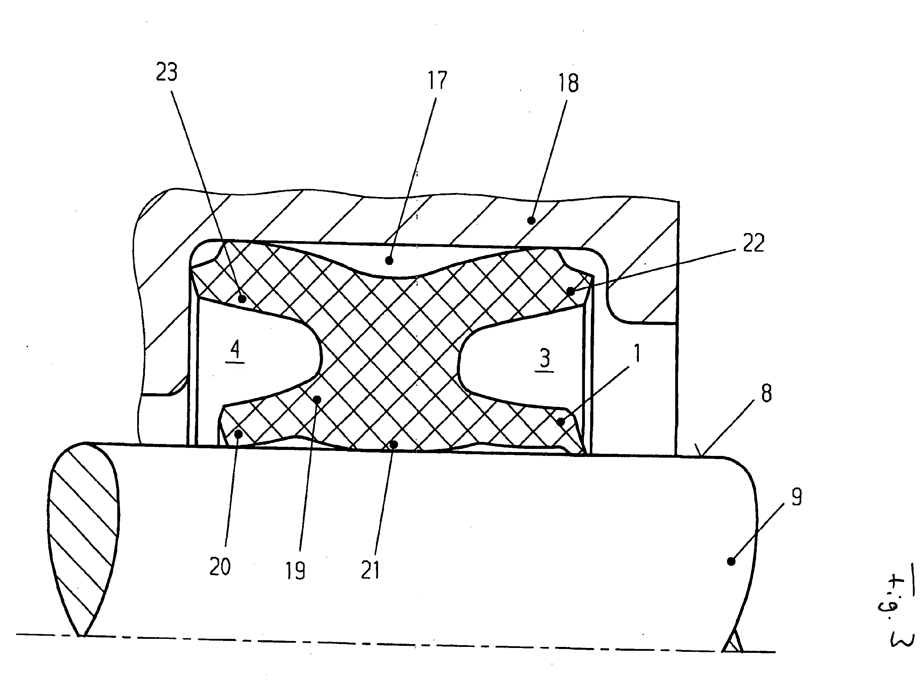

In Fig. 3 ist ein weiteres Ausführungsbeispiel gezeigt, das sich vom Ausführungsbeispiel aus Fig. 2 hauptsächlich dadurch unterscheidet, dass der Abstreifer keine Führungsnase und das zweite Maschinenelement 18 keine Führungsnut aufweist. Dennoch, trotz der vereinfachten Ausgestaltung von Abstreifer und zweitem Maschinenelement 18, ist das vorteilhafte Prinzip der schwimmenden Anordnung verwirklicht.

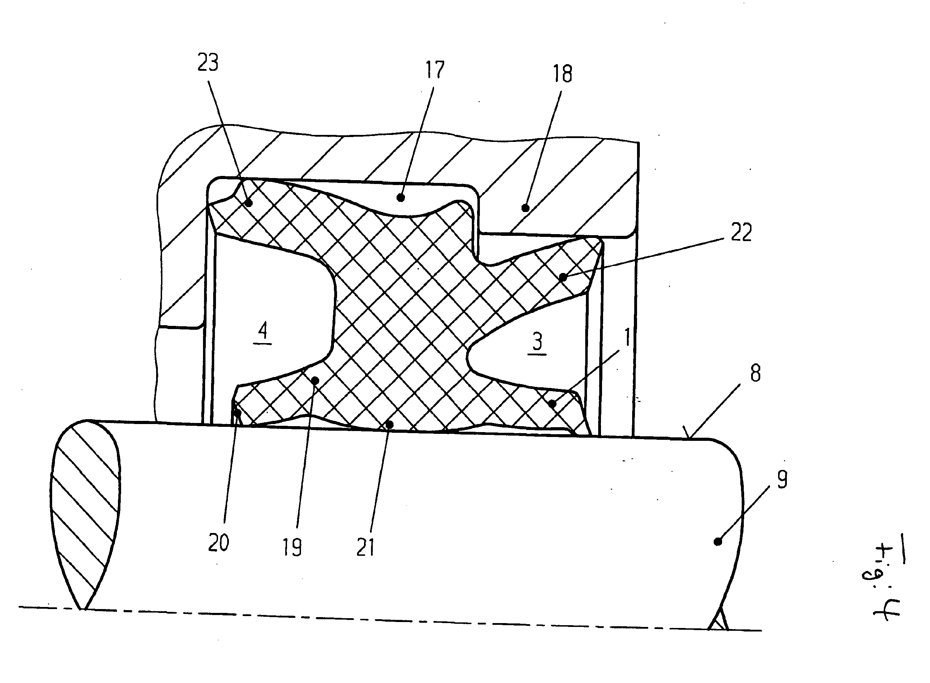

In Fig. 4 ist ein weiteres Ausführungsbeispiel gezeigt, ähnlich den Ausführungsbeispielen aus den Figuren 2 und 3, wobei jedoch der Schutz vor eindringenden Verunreinigungen aus der Umgebung 3 auf der der abzustreifenden Oberfläche 8 radial abgewandten Seite, bezogen auf das Ausführungsbeispiel aus Fig. 3, verbessert ist.

## Patentansprüche

1. Abstreifer, umfassend zumindest eine Abstreiflippe (1), die eine Lippenkontur (2) aufweist, wobei die Lippenkontur (2), im Längsschnitt betrachtet, von der Umgebungsseite (3) des Abstreifers axial in Richtung der Seite des abzudichtenden Raums (4) bogenförmig gestaltet ist und eine Tangentensteigung (5) aufweist, die stetig ansteigt, **dadurch gekennzeichnet, dass** die Lippenkontur (2) die Geometrie einer Viertel Ellipse (6) aufweist.

2. Abstreifer nach Anspruch 1, **dadurch gekennzeichnet, dass** die Hauptachse (7) der elliptischen Lippenkontur (2) und die abzustreifende Oberfläche (8) eines relativ zum Abstreifer axial hin- und her beweglichen ersten Maschinenelements (9) einen Winkel (10) zwischen -45° und +45° einschließt.

3. Abstreifer nach Anspruch 2, **dadurch gekennzeichnet, dass** der Winkel (10) 0° bis +15° beträgt.

4. Abstreifer nach einem der Ansprüche 1 bis 3, **dadurch gekennzeichnet, dass** das Verhältnis aus Länge (11) der Hauptachse (7) zu Länge (12) der Nebenachse (13) 0,5 bis 0,8 beträgt.

5. Abstreifer nach einem der Ansprüche 1 bis 4, **dadurch gekennzeichnet, dass** die bogenförmige Lippenkontur (2) umgebungsseitig (3) axial in einen ebenen, sich parallel zur abzustreifenden Oberfläche (8) erstreckenden Abstreifbereich (14) ausläuft.

6. Abstreifer nach Anspruch 5, **dadurch gekennzeichnet, dass** das Verhältnis aus axialer Länge (15) des Abstreifers zu axialer Länge (16) des Abstreifbereichs (15) ≤ 0,2 ist.

7. Abstreifer nach einem der Ansprüche 1 bis 6, **dadurch gekennzeichnet, dass** dieser kreisringförmig ausgebildet ist, mit einer radial inneren Lippenkontur (2).

8. Abstreiferanordnung, umfassend einen Abstreifer nach einem der Ansprüche 1 bis 7, der die abzustreifende Oberfläche (8) des ersten Maschinenelements (9) mit seiner Abstreiflippe (1) anliegend berührt, wobei der Abstreifer in einem radial in Richtung des ersten Maschinenelements (9) offenen Einbauraum (17) eines zweiten Maschinenelements (18) schwimmend angeordnet ist.

9. Abstreiferanordnung nach Anspruch 8, **dadurch gekennzeichnet, dass** der Abstreifer im Einbauraum (17) in axialer und/oder radialer Richtung schwimmend angeordnet ist.

## Claims

1. Scraper, comprising at least one scraping lip (1) which has a lip contour (2), wherein the lip contour (2), as viewed in longitudinal section, is designed to be curved axially from the surroundings side (3) of the scraper in the direction of the side of the space (4) which is to be sealed, and has a tangent slope (5) which rises continuously, **characterized in that** the lip contour (2) has the geometry of a quarter ellipse (6).

2. Scraper according to Claim 1, **characterized in that** the main axis (7) of the elliptical lip contour (2) and the surface (8) to be scraped of a first machine element (9), which is movable to and fro axially relative to the scraper, enclose an angle (10) of between -45° and +45°.

3. Scraper according to Claim 2, **characterized in that** the angle (10) is 0° to +15°.

4. Scraper according to one of Claims 1 to 3, **characterized in that** the ratio of length (11) of the main axis (7) to length (12) of the secondary axis (13) is 0.5 to 0.8.

5. Scraper according to one of Claims 1 to 4, **characterized in that** the curved lip contour (2) peters out axially on the surroundings side (3) into a planar scraping region (14) extending parallel to the surface (8) to be scraped.

6. Scraper according to Claim 5, **characterized in that** the ratio of axial length (15) of the scraper to axial length (16) of the scraping region (14) is ≤ 0.2.

7. The scraper as claimed in one of Claims 1 to 6, **characterized in that** said scraper is designed in the shape of a circular ring, with a radially inner lip contour (2).

8. Scraper arrangement, comprising a scraper according to one of Claims 1 to 7, the scraper making contact with the surface (8) to be scraped of the first machine element (9) by bearing with its scraping lip (1) thereagainst, wherein the scraper is arranged in a floating manner in an installation space (17) in a second machine element (18), said installation space being open radially in the direction of the first machine element (9).

9. Scraper arrangement according to Claim 8, **characterized in that** the scraper is arranged in a floating manner in the axial and/or radial direction in the installation space (17).

## Revendications

1. Racleur, comprenant au moins une lèvre de raclage (1), qui présente un contour de lèvre (2), dans lequel le contour de lèvre (2), considéré en coupe longitudinale, est réalisé en forme d'arc depuis le côté de l'atmosphère (3) du racleur axialement en direction du côté de l'espace à rendre étanche (4) et présente une pente de tangente (5) qui augmente en continu, **caractérisé en ce que** le contour de lèvre (2) présente la géométrie d'un quart d'ellipse (6).

2. Racleur selon la revendication 1, **caractérisé en ce que** l'axe principal (7) du contour de lèvre elliptique (2) et la surface à racler (8) d'un premier élément de machine (9) mobile axialement en va-et-vient par rapport au racleur forment un angle (10) compris entre -45° et +45°.

3. Racleur selon la revendication 2, **caractérisé en ce que** l'angle (10) vaut de 0° à +15°.

4. Racleur selon l'une quelconque des revendications 1 à 3, **caractérisé en ce que** le rapport entre la longueur (11) de l'axe principal (7) et la longueur (12) de l'axe secondaire (13) vaut de 0,5 à 0,8.

5. Racleur selon l'une quelconque des revendications 1 à 4, **caractérisé en ce que** le contour de lèvre en forme d'arc (2) se termine, du côté de l'atmosphère (3) axialement en une zone de raclage plane (14) s'étendant parallèlement à la surface à racler (8).

6. Racleur selon la revendication 5, **caractérisé en ce que** le rapport entre la longueur axiale (15) du racleur et la longueur axiale (16) de la zone de raclage (14) est ≤ 0,2.

7. Racleur selon l'une quelconque des revendications 1 à 6, **caractérisé en ce que** celui-ci est réalisé en forme d'arc de cercle, avec un contour de lèvre (2) radialement intérieur.

8. Dispositif de racleur, comprenant un racleur selon l'une quelconque des revendications 1 à 7, qui touche par contact avec sa lèvre de raclage (1) la surface à racler (8) du premier élément de machine (9), dans lequel le racleur est disposé de façon flottante dans un espace de montage (17) d'un deuxième élément de machine (18), ouvert radialement en direction du premier élément de machine (9).

9. Dispositif de racleur selon la revendication 8, **caractérisé en ce que** le racleur est disposé dans l'espace de montage (17) de façon flottante en direction axiale et/ou radiale.
